(19) Europäisches Patentamt
European Patent Office
Office européen des brevets

(11) **EP 4 678 617 A1**

(12) **EUROPEAN PATENT APPLICATION**
published in accordance with Art. 153(4) EPC

(43) Date of publication:
**14.01.2026 Bulletin 2026/03**

(21) Application number: **24766984.9**

(22) Date of filing: **28.02.2024**

(51) International Patent Classification (IPC):
**C04B 35/596** (2006.01)　　**F16C 33/32** (2006.01)

(52) Cooperative Patent Classification (CPC):
**C04B 35/584; F16C 33/32**

(86) International application number:
**PCT/JP2024/007311**

(87) International publication number:
**WO 2024/185613 (12.09.2024 Gazette 2024/37)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **03.03.2023 JP 2023032821**

(71) Applicant: **Niterra Materials Co., Ltd.**
**Yokohama-shi, Kanagawa 235-0032 (JP)**

(72) Inventors:
• **HOUTSUKI, Naoto**
　**Yokohama-shi, Kanagawa 235-0032 (JP)**
• **AOKI, Katsuyuki**
　**Yokohama-shi, Kanagawa 235-0032 (JP)**
• **FUKASAWA, Takayuki**
　**Yokohama-shi, Kanagawa 235-0032 (JP)**

(74) Representative: **Hoffmann Eitle**
**Patent- und Rechtsanwälte PartmbB**
**Arabellastraße 30**
**81925 München (DE)**

(54) **SILICON NITRIDE SINTERED COMPACT, ABRASION-RESISTANT MEMBER, BEARING BALL, AND BEARING**

(57) A silicon nitride sintered compact according to an embodiment includes a silicon nitride particle; and multiple grain boundary phase strengthened regions including a grain boundary phase strengthened metal as a simple metal or a metal compound. The grain boundary phase strengthened metal includes one or more elements selected from molybdenum (Mo), tungsten (W), niobium (Nb), titanium (Ti), hafnium (Hf), zirconium (Zr), tantalum (Ta), vanadium (V), and chromium (Cr). In a cross section including a center of gravity of a reference grain boundary phase strengthened region among the multiple grain boundary phase strengthened regions, the number of other grain boundary phase strengthened regions present in a first region of interest that is outside a circle with a radius of 2 μm from the center of gravity and inside a circle with a radius of 9 μm from the center of gravity is 2 to 40.

FIG. 4

**Description**

**TECHNICAL FIELD**

Embodiments described below generally relate to a silicon nitride sintered compact, a wear-resistant member, a bearing ball, and a bearing.

**BACKGROUND ART**

Wear-resistant members are used in a variety of fields, such as bearing members, various roll materials for rolling mills, compressor vanes, gas turbine blades, engine parts such as cam rollers, etc. Ceramics have traditionally been used for wear-resistant members in these various fields, and silicon nitride in particular is preferred for its excellent wear resistance.

Silicon nitride wear-resistant members are sometimes used in cryogenic environments. Examples of when silicon nitride wear-resistant members are used in cryogenic environments include pumps that use liquefied gases such as liquid nitrogen, liquefied natural gas (LNG), and liquid hydrogen.

Wear-resistant members made of silicon nitride are either synonymous with silicon nitride sintered compacts or are produced by finish-processing silicon nitride sintered compacts. Conventional silicon nitride sintered compact compositions include silicon nitride-rare earth oxide-aluminum oxide systems and silicon nitride-rare earth oxide-aluminum oxide-titanium oxide systems, as described in Japanese Patent Laid-Open No. 59-182276 (Patent Document 1). Sintering aids such as rare earth oxides in the above compositions are added to generate a grain boundary phase (liquid phase) consisting of compounds such as Si-rare earth element-Al-O-N during sintering, thereby densifying the sintered compact and enabling it to have high strength.

Japanese Patent No. 4744704 (Patent Document 2) discloses a technique for adjusting the particle size and shape of titanium nitride and mixing it with silicon nitride raw material in multiple batches. It also discloses controlling the $\alpha$ phase transition rate of the silicon nitride powder raw material. It shows that controlling the titanium nitride content in a silicon nitride sintered compact, for example, by adding TiN particles of 1 $\mu$m or less, increases the strength. It also shows that the absence of agglomerates reduces the variation in strength.

**PRIOR ART DOCUMENTS**

**PATENT DOCUMENT**

Patent Document 1: Japanese Patent Laid-Open No. S59-182276
Patent Document 2: Japanese Patent No. 4744704

**SUMMARY OF THE INVENTION**

**PROBLEMS TO BE SOLVED BY THE INVENTION**

However, although silicon nitride sintered compacts manufactured based on the above-mentioned conventional compositions have improved bending strength, fracture toughness, and wear resistance, their bending strength at cryogenic temperatures below -10°C (e.g., approximately - 200°C) is comparable to that at room temperature. Wear-resistant components, such as rolling bearings, which require particularly excellent sliding properties, are increasingly exposed to cryogenic environments, and as a result, further improvements are required.

Therefore, there is an increasing demand for silicon nitride sintered compacts to have strength at cryogenic temperatures. Examples of applications in which silicon nitride sintered compacts are used at cryogenic temperatures include those for liquefied natural gas (LNG), liquefied hydrogen, and liquefied propane gas (LPG). Demand for liquefied natural gas in particular is on the rise, and liquefied natural gas is often used at cryogenic temperatures of around -160°C to maintain its liquid state.

Methane hydrate has also attracted attention as a new energy source, and this methane hydrate is also used at cryogenic temperatures. Pumps are often used to transport these materials, and these pumps often use bearings made of silicon nitride. As a result, the frequency of bearing balls at cryogenic temperatures has increased, and further improvements in the strength of silicon nitride sintered compacts have become necessary.

As electric vehicles and wind power generation become more common, opportunities for their use in sub-zero low temperature environments are increasing. Therefore, further improvements are required for silicon nitride bearing balls used in wind power generation and electric vehicles, so that they have excellent strength at sub-zero temperatures and minimize volume change.

The present invention has been made to address the above-mentioned problems and demands, and aims to provide a silicon nitride sintered compact, a wear-resistant member, a bearing ball, and a bearing that, in addition to high strength and high toughness, has excellent bending strength, particularly at cryogenic temperatures, and can improve the amount of volume change at cryogenic temperatures and the coefficient of thermal expansion (e.g., linear expansion coefficient) when changed from room temperature (20°C) to - 200°C.

**MEANS FOR SOLVING THE PROBLEMS**

A silicon nitride sintered compact according to an embodiment includes a silicon nitride particle; and multiple grain boundary phase strengthened regions including a grain boundary phase strengthened metal as a simple metal or a metal compound. The grain boundary phase strengthened metal includes one or more elements selected from molybdenum (Mo), tungsten (W), niobium (Nb), titanium (Ti), hafnium (Hf), zirconium (Zr), tantalum (Ta), vanadium (V), and chromium (Cr). In a cross section including a center of gravity of a reference grain boundary phase strengthened region among the multiple grain boundary phase strengthened regions, the number of other grain boundary phase strengthened regions present in a first region of interest that is outside a circle with a radius of 2 $\mu$m from the center of gravity and inside a circle with a radius of 9 $\mu$m from the center of gravity is 2 to 40.

As a result of this investigation, various metal elements or compounds are mixed in a predetermined ratio to form an auxiliary mixture as a sintering auxiliary, and fine silicon nitride raw material powder is then mixed with the auxiliary mixture. The mixed powder is then stirred until just before granulation to improve dispersibility, resulting in a slurry, which is then used to produce granulated powder. The granulated powder is then molded to produce a compact, which is then degreased. The resulting compact is then sintered under predetermined conditions. If necessary, the sintered compact can then be subjected to HIP (Hot Isostatic Pressing) under predetermined conditions, resulting in a silicon nitride sintered compact that not only has high strength and high toughness, but also has excellent sliding properties, particularly in terms of rolling life.

Before mixing with silicon nitride powder, a grain boundary phase strengthened metal (one or more metals or metal compounds selected from molybdenum, tungsten, niobium, titanium, hafnium, zirconium, tantalum, vanadium, and chromium) is mixed with an auxiliary agent (powder of an aluminum compound such as alumina or aluminum nitride). This makes it possible to control the dispersion state of the grain boundary phase strengthened region in the silicon nitride sintered compact. Furthermore, the one or more metals or metal compounds may be a combination of multiple metals or metal compounds. In other words, different metal compounds may be combined. An example of a combination of different metal compounds that constitutes the grain boundary phase strengthened region is a combination of titanium nitride and hafnium oxide.

**BRIEF DESCRIPTION OF THE DRAWINGS**

FIG. 1 is a front view showing an example of a bearing ball according to an embodiment.
FIG. 2 is a diagram illustrating an example of a bearing according to the embodiment.
FIG. 3 is a diagram schematically showing an example of the relationship between grain boundary phase strengthened regions and silicon nitride particles when a cross section of a silicon nitride sintered compact according to the embodiment is observed as an SEM image.
FIG. 4 is a diagram schematically showing a first example of a region of interest in a silicon nitride sintered compact according to the embodiment.
FIG. 5 is a diagram schematically showing a second example of a region of interest in the silicon nitride sintered compact according to the embodiment.

**DESCRIPTION OF EMBODIMENTS**

Hereinafter, embodiments of the silicon nitride sintered compact, the wear-resistant member, the bearing ball, and the bearing of the present invention will be described.

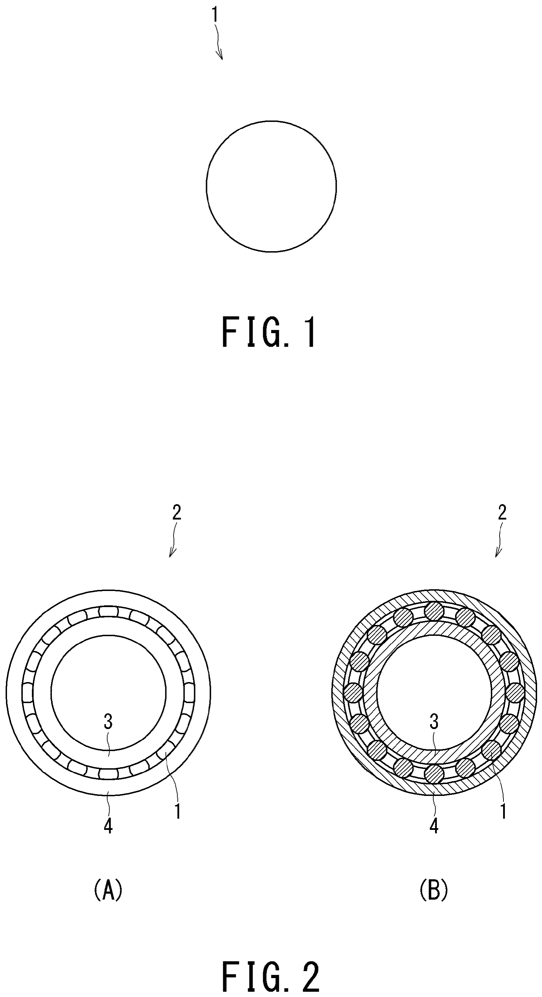

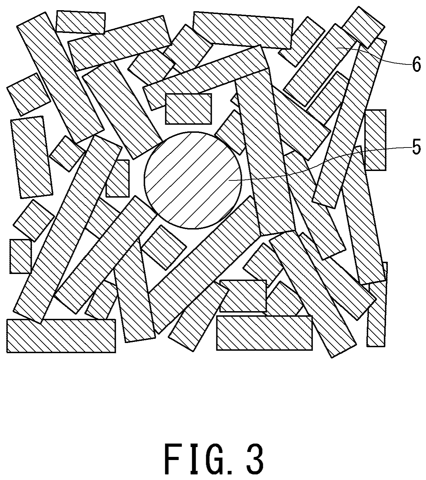

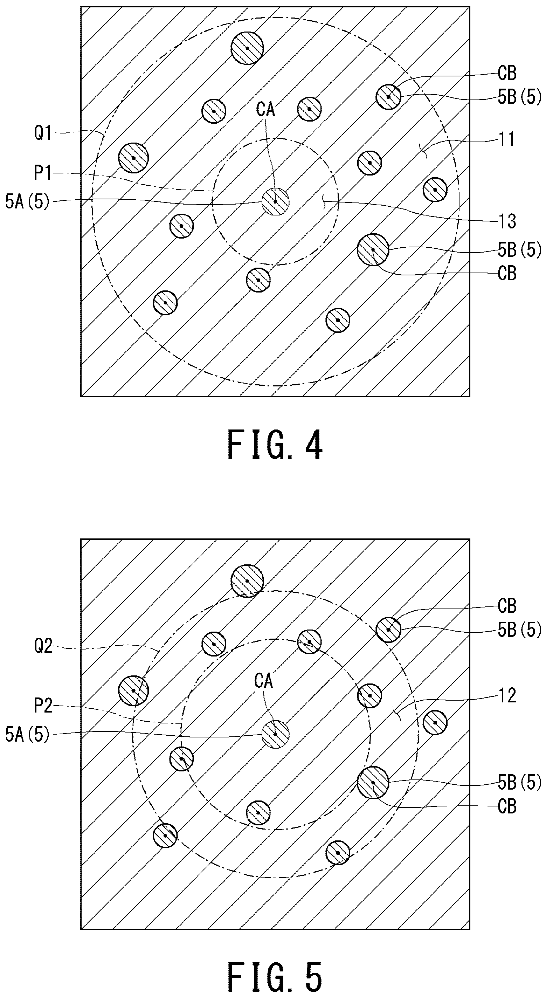

FIG. 1 is a front view of a bearing ball according to an embodiment. FIG. 2 is a partial cross-sectional view of a bearing according to an embodiment. Division (A) of FIG. 2 is a front view of the bearing, and Division (B) of FIG. 2 is a cross-sectional view of the bearing. FIG. 3 is a diagram showing the relationship between grain boundary phase strengthened regions and a silicon nitride particle. FIG. 4 and FIG. 5 are diagrams showing regions of interest. Reference numeral 1 denotes a bearing ball, reference numeral 2 denotes a bearing, reference numeral 3 denotes an inner ring of the bearing 2, reference numeral 4 denotes an outer ring of the bearing 2, reference numeral 5 denotes a grain boundary phase strengthened region, reference numeral 6 denotes silicon nitride particles, reference numeral 11 denotes a first region of interest, reference numeral 12 denotes a second region of interest, and reference numeral 13 denotes a third region of interest. Reference numeral 5A denotes a "reference grain boundary phase strengthened region" that serves as a reference among the grain boundary phase strengthened regions 5, and reference numeral 5B denotes "other grain boundary phase strengthened regions" among the grain boundary phase strengthened regions 5 other than the reference grain boundary phase strengthened region 5A.

In the silicon nitride sintered compact according to the embodiment, the grain boundary phase strengthened metal is included as a metal element or a metal compound, and the silicon nitride particles 6 include multiple grain boundary phase strengthened regions 5, the grain boundary phase strengthened metal being one or more selected from molybdenum, tungsten, niobium, titanium, hafnium, zirconium, tantalum, vanadium, and chromium. In the silicon nitride sintered compact, in a cross section including a center of gravity CA (shown in FIG. 4) of a reference grain boundary phase strengthened region 5A among the multiple grain boundary phase strengthened regions 5, the number of other grain boundary phase strengthened regions 5B present in a first region of interest 11 outside a circle P1 with a radius of 2 $\mu$m from the center of gravity CA and inside a circle Q1 with a radius of 9 $\mu$m from the center of gravity CA is 2 or more and 40 or less (the following formula (1)). FIG. 4 illustrates an example in which the number of other grain boundary phase strengthened regions 5B present in the first region of interest 11 is 12.

$$2 \leq \text{The number of other grain boundary phase strengthened regions 5B present in the first region of interest 11} \leq 40 \tag{1}$$

If the number of other grain boundary phase strengthened regions 5B present in the first region of interest 11 is less than 2, the dispersion of the grain boundary phase strengthened regions 5 may be too sparse, resulting in variations in bending strength at low temperatures from one measurement point to another, and there is a risk that a silicon nitride sintered compact with sufficient bending strength may not be obtained. On the other hand, if the number of other grain boundary phase strengthened regions 5B present in the first region of interest 11 exceeds 40, there is a risk that the linear expansion coefficient at -200°C cannot be set in the range of -0.1 or more and 0 or less, assuming that the linear expansion coefficient at 25°C (room temperature) is 0.

It is more preferable that the average number of other grain boundary phase strengthened regions 5B present in the first region of interest 11 is 4 or more and 30 or less (see formula (2) below). As described above, by controlling the number of other grain boundary phase strengthened regions 5B in the silicon nitride sintered compact, it is possible to obtain a silicon nitride sintered compact having excellent bending strength and linear expansion coefficient even at extremely low temperatures. Note that, for m (m is an integer of 2 or more) reference grain boundary phase strengthened regions 5A, the number m of other grain boundary phase strengthened regions 5A present in each of the m regions of interest 11 (or m regions of interest 12) can be obtained. Therefore, the average number can be determined by averaging the m numbers. Furthermore, by increasing the number of measurement cross sections for one reference grain boundary phase strengthened region 5A, it is possible to obtain multiple numbers of other grain boundary phase strengthened regions 5B.

$$4 \leq \text{The average number of other grain boundary phase strengthened regions 5B present in the first region of interest 11} \leq 30 \tag{2}$$

Excellent bending strength at cryogenic temperatures means that the bending strength at -200°C is greater than the bending strength at 25°C, and the bending strength at room temperature (25°C) is 850 MPa or more.

Next, a description will be given of multiple grain boundary phase strengthened regions 5 including one or more metals or metal compounds selected from molybdenum, tungsten, niobium, titanium, hafnium, zirconium, tantalum, vanadium, and chromium as a grain boundary phase strengthened metal. When the average value of the sum of the major axis diameter and minor axis diameter of the grain boundary phase strengthened region 5 divided by 2 is taken as the diameter, the grain boundary phase strengthened region 5 preferably has a diameter of 2 $\mu$m or less. In the silicon nitride sintered compact, the content of the grain boundary phase strengthened metal constituting the grain boundary phase strengthened region 5 is preferably 0.1 mass % or more and 9 mass % or less, calculated as the metal element. If the content of the grain boundary phase strengthened metal constituting the grain boundary phase strengthened region 5 is less than 0.1 mass % calculated as the metal element, the effect of adding the grain boundary phase strengthened metal may not be fully obtained. On the other hand, if the content of the grain boundary phase strengthened metal constituting the grain boundary phase strengthened regions 5 exceeds 9 mass % in terms of the simple metal, the grain boundary phase strengthened metals may aggregate together, which may result in variations in the distribution of the multiple grain boundary phase strengthened regions 5. More preferably, the content of the grain boundary phase strengthened metal constituting the grain boundary phase strengthened regions 5 is 0.1 mass % or more and 4 mass % or less in terms of the simple metal. It is because a smaller content of the grain boundary phase strengthened metal constituting the grain boundary phase strengthened regions 5 can reduce the effect of the linear expansion coefficient.

It is more preferable that such grain boundary phase strengthened region 5 includes oxide, carbide, or nitride selected from one or more of titanium, tungsten, hafnium, molybdenum, niobium, zirconium, tantalum, vanadium, and chromium as the grain boundary phase strengthened metals.

The grain boundary phase strengthened region 5 preferably includes the grain boundary phase strengthened metal as one or more compounds selected from titanium nitride, tungsten carbide, hafnium oxide, molybdenum carbide, and zirconium oxide. More preferably, the grain boundary phase strengthened region 5 includes a titanium nitride or tungsten carbide compound as the main component. Even more preferably, the grain boundary phase strengthened region 5 is composed of one type of titanium nitride particles as the metal compound, or a small amount of titanium nitride aggregates. The term "main component" refers to the component that is present in the largest amount by mass in the grain boundary phase strengthened metal.

The grain boundary phase strengthened metals that make up these grain boundary phase strengthened regions 5 may have different structures in the raw material and in the sintered state. For example, the raw material may be titanium oxide powder (oxide of the grain boundary phase strengthened metal) and become titanium nitride (nitride of the grain boundary phase strengthened metal) after sintering. In other words, the metals may be in different compounds before and after sintering, or a simple substance may become a compound, or a compound may become a simple substance, or the original compound or simple substance may remain.

The diameter is the average value of the sum of the major axis diameter and minor axis diameter of the grain boundary phase strengthened region 5 in the silicon nitride sintered compact divided by 2. If the diameter exceeds 2 $\mu$m, the bending strength, fracture toughness, and rolling life of the silicon nitride sintered compact may be reduced. As will be described later, since the silicon nitride wear-resistant member according to the present invention includes a grain boundary phase, if the grain size of the grain boundary phase strengthened region 5 is too large, the dispersibility of the grain boundary phase strengthened region 5 cannot be controlled. This results in localized interruption of the connection of the grain boundary phase, which is undesirable.

Considering the adverse effects on the grain boundary phase, it is undesirable for the grain boundary phase strengthened region 5 to be in a state where a large amount of grain boundary phase particles are agglomerated. It is preferable for particles of a metal compound such as titanium nitride to exist in a single state, or a state where a small number of metal compound particles are present in an agglomerated state. The "agglomerated state" refers to a state where metal compound particles are in direct contact with each other. Here, an example of a state where a large amount of metal compound particles are agglomerated is an agglomerated portion of titanium nitride particles. Even in an agglomerated state, it is preferable for the diameter to be 2 $\mu$m or less.

The grain boundary phase-strengthened metal compounds, such as titanium nitride particles, have the function of strengthening the grain boundary phase. If such agglomerations exist, the wear-resistant component will receive stress unevenly when subjected to sliding impact, which may shorten the rolling life.

Considering the influence of such grain boundary phase strengthened metal compounds such as titanium nitride, the diameter of the grain boundary phase strengthened region 5, which is the average value of the sum of the major axis diameter and minor axis diameter divided by 2, is preferably 2 $\mu$m or less. More preferably, the diameter is 1.0 $\mu$m or less. The grain boundary phase strengthened region 5 is a region that appears white when observed with an SEM at 5000x magnification, and when analyzed by SEM-EDX, it is found to include one or more metals selected from molybdenum, tungsten, niobium, titanium, hafnium, zirconium, tantalum, vanadium, and chromium. The major axis diameter of the grain boundary phase strengthened region 5 is the largest distance between two parallel lines tangent to the outline of the grain boundary phase strengthened region 5. The minor axis diameter of the grain boundary phase strengthened region 5 is the smallest distance between two parallel lines tangent to the outline of the grain boundary phase strengthened region 5.

The diameter is preferably measured using an SEM to observe the cross section of the silicon nitride sintered compact at a magnification of 5000 times. In particular, in the case of grain boundary phase strengthened regions 5 consisting of rounded titanium nitride particles as described below, a measurement method using an observation image at a magnification of 5000 times with an SEM is effective. If the grain boundary phase strengthened regions 5 are small, less than 0.1 $\mu$m, there is a risk that the effect will not be sufficient. In other words, the diameter of the grain boundary phase strengthened regions 5 is preferably in the range of 0.1 $\mu$m or more and 2 $\mu$m or less.

In the present invention, the use of such enlarged photographs observed with an SEM is effective for measuring the major axis diameter and minor axis diameter of the grain boundary phase strengthened region 5, as well as for measuring the porosity and maximum pore diameter, which will be described later. In calculating each measurement value, it is preferable to measure at least three arbitrary unit areas of 100 $\mu$m $\times$ 100 $\mu$m and calculate the average value. The magnification of the enlarged photograph is preferably 5000 times.

It is preferable that the difference between the major axis diameter and the minor axis diameter of the grain boundary phase strengthened region 5 is in the range of 1 $\mu$m or less. If the difference between the major axis diameter and the minor axis diameter of the grain boundary phase strengthened region 5 becomes large, the shape of the grain boundary phase strengthened region 5 will become substantially oblong in cross section. This will cause variations in the influence on the grain boundary phase, resulting in areas in the silicon nitride sintered compact with variations in various properties such as strength, so it is undesirable for the difference to be large. When the average value of the minor axis diameter and the major axis diameter of the grain boundary phase strengthened region 5 is taken as the diameter, it is preferable that the minor axis diameter is 50% or more of the diameter. Furthermore, it is even more preferable that the minor axis diameter of the grain boundary phase strengthened region 5 is 70% or more of the diameter.

For this reason, it is preferable that the shape of the grain boundary phase strengthened regions 5 be a substantially spherical shape with a difference between the major axis diameter and the minor axis diameter of the grain boundary phase strengthened regions 5 being 1 $\mu$m or less. More preferably, the difference is 0.5 $\mu$m or less. By dispersing such grain boundary phase strengthened regions 5, the grain boundary phase is strengthened and the variation in the influence of the grain boundary phase strengthened regions 5 within the grain boundary phase is controlled.

Here, the dispersion of the grain boundary phase strengthened regions 5 will be described. In a cross section including the center of gravity CA of the reference grain boundary phase strengthened region 5A, it is preferable that the number of multiple grain boundary phase strengthened regions 5B present in the first region of interest 11 is 2 or more and 40 or less (the above formula (1)). The first region of interest 11 is outside a circle P1 having a radius of 2 $\mu$m and centered at the center of gravity CA, and inside a circle Q1 having a radius of 9 $\mu$m and centered at the center of gravity CA.

In addition, in a cross section including the center of gravity CA of the reference grain boundary phase strengthened region 5A, it is preferable that the number of grain boundary phase strengthened regions 5B present in the second region of interest 12 be 1 or more and 30 or less (the following formula (3)). The second region of interest 12 is outside a circle P2 having a radius of 3 $\mu$m and centered on the center of gravity CA, and inside a circle Q2 having a radius of 7 $\mu$m and centered on the center of gravity CA. FIG. 5 illustrates an example where the number of other grain boundary phase strengthened regions 5B present in the second region of interest 12 is 6.

$$1 \leq \text{The number of other grain boundary phase strengthened regions 5B present in the second region of interest } 12 \leq 30 \tag{3}$$

When multiple reference grain boundary phase strengthened regions 5A, for example, three, are selected, it is preferable that the average number of grain boundary phase strengthened regions 5B present in the first region of interest 11 at three locations is 4 or more and 30 or less (the above formula (2)). Furthermore, when multiple reference grain boundary phase strengthened regions 5A, for example, three, are selected, it is preferable that the average number of grain boundary phase strengthened regions 5B present in the second region of interest 12 at three locations is 2 or more 20 or less (the following formula (4)).

$$2 \leq \text{The average number of other grain boundary phase strengthened regions 5B present in the second region of interest } 12 \leq 20 \tag{4}$$

Furthermore, it is preferable that the number of other grain boundary phase strengthened regions 5B present in the third region of interest 13, which is on or inside a circle with a radius of 2 $\mu$m from the center of gravity CA of the reference grain boundary phase strengthened region 5A, is 3 or less (see formula (5) below). Fig. 4 illustrates an example in which the number of other grain boundary phase strengthened regions 5B present in the third region of interest 13 is zero.

$$\text{The number of other grain boundary phase strengthened regions 5B present in the third region of interest } 13 \leq 3 \tag{5}$$

When multiple reference grain boundary phase strengthened regions 5A, for example, three, are selected, it is preferable that the difference between the maximum and minimum numbers of grain boundary phase strengthened regions 5B present in the first region of interest 11 within the same sintered compact be 25 or less. The smaller this difference, the more uniformly dispersed the regions are, which is preferable.

As described above, when the center of gravity CB of another grain boundary phase strengthened region 5B is present within the ring-shaped regions of interest 11 and 12 centered on the center of gravity CA of the reference grain boundary phase strengthened region 5A, that grain boundary phase strengthened region 5B is counted. Note that when multiple grain boundary phase strengthened regions 5B are in contact with each other, they are not counted separately but are counted collectively as one grain boundary phase strengthened region 5B.

The minor axis diameter of the grain boundary phase strengthened region 5 is the smallest distance between two parallel lines tangent to the outline of the grain boundary phase strengthened region 5. In addition, the silicon nitride sintered compact has a surface or cross-sectional lightness L* of 10 or more and 30 or less, and a chroma C of 30 or less in the L*a*b* color system of JIS Z 8729. This further reduces the variation in rolling life when used at extremely low temperatures, so it is preferable that the color system be in the above-mentioned range.

In the silicon nitride sintered compact, the total content of one or more grain boundary phase strengthened metals (simple elements or compounds) selected from molybdenum, tungsten, niobium, titanium, hafnium, zirconium, tantalum, vanadium, and chromium is preferably 0.1 mass % or more and 9 mass % or less, calculated as simple metals. If the total content of one or more grain boundary phase strengthened metals (simple elements or compounds) selected from molybdenum, tungsten, niobium, titanium, hafnium, zirconium, tantalum, vanadium, and chromium is less than 0.1 mass% in terms of simple metals, the effects of inclusion cannot be obtained. On the other hand, if the total content exceeds 9 mass%, the content becomes too high, resulting in a decrease in the bending strength, fracture toughness, and rolling life of the sintered compact.

There is no particular problem with silicon nitride sintered compacts as long as they include a predetermined amount of grain boundary phase-reinforced metal (simple element or compound) selected from molybdenum, tungsten, niobium, titanium, hafnium, zirconium, tantalum, vanadium, and chromium. For example, angular grain boundary phase-reinforced regions 5, represented by fibers and whiskers, are not particularly desirable. While fiber-reinforced silicon nitride sintered compacts have been available for some time, this is not a problem for structural materials that do not have direct sliding parts, such as gas turbine blades. For example, in bearing components, specifically bearing balls, rollers, and races, where the surface of the silicon nitride sintered compact serves as the sliding surface, if the sliding surface is made of fibers or whiskers, grain shedding is likely to occur at the sliding surface, becoming the starting point for fracture and actually shortening the rolling life.

Therefore, it is preferable to have a grain boundary phase strengthened region 5 that is rounded and has few corners. Such a raw compound powder may be used in advance to form the grain boundary phase strengthened region 5 that is rounded and has no corners. Alternatively, a powder of a compound (oxide, carbide, nitride, boride, or silicide) of one or more grain boundary phase strengthened metals selected from molybdenum, tungsten, niobium, titanium, hafnium, zirconium, tantalum, vanadium, and chromium may be added, and the grain boundary phase strengthened region 5 may be produced by converting it into a simple elemental metal included in the compound or a compound different from the before compound after sintering. The phrase " converting it into a compound different from the before compound" refers to, for example, if the compound added is an oxide, the oxide in the silicon nitride sintered compact may be converted into a nitride.

Here, titanium nitride, a compound of a grain boundary phase strengthened metal, will be described as an example of one or more grain boundary phase strengthened metals (simple elements or compounds) selected from molybdenum, tungsten, niobium, titanium, hafnium, zirconium, tantalum, vanadium, and chromium. Titanium oxide is preferably used as the raw material for what becomes titanium nitride in the silicon nitride sintered compact. Titanium oxide powder is an oxide, so it is chemically stable and easy to handle, and it is particularly effective in improving the strength of the sintered compact. Usually, when sintering a silicon nitride sintered compact, the sintering is carried out after a silicon nitride molded compact of a predetermined shape has been produced.

During the nitriding step, when titanium oxide powder is nitrided to titanium nitride during sintering, the oxygen in the resulting product reacts with the grain boundary phase, thereby lowering the melting point of the grain boundary phase and promoting further densification, thereby substantially improving the strength of the silicon nitride sintered compact. This phenomenon is most easily achieved with oxides, which is preferable.

The term "rounded and without corners" refers to the absence of convex portions with acute angles of 90° or less on the surface of titanium nitride particles when particles of the grain boundary phase strengthened metal or compound (e.g., titanium nitride particles) that make up the grain boundary phase strengthened region 5 are observed under an SEM image. Titanium nitride particles, including particles with normal shapes, have surface irregularities microscopically, among which are sharp angles of 90° or less. When subjected to repeated/continuous sliding as a wear-resistant member, the presence of such sharp angles will easily cause cracks to form in the grain boundary phase, degrading the repeated/continuous sliding characteristics.

When viewed cross-sectionally, this silicon nitride sintered compact preferably has a random orientation of silicon nitride particles 6 (shown in FIG. 3) present on or within 1 $\mu$m from the edge of the grain boundary phase strengthened region 5. Random orientation of silicon nitride particles 6 (shown in FIG. 3) near the grain boundary phase strengthened region 5 reduces anisotropy, providing a silicon nitride sintered compact that is easy to use regardless of the orientation of the particles. It is also preferable that among the silicon nitride particles 6 present on or within 1 $\mu$m from the edge of the grain boundary phase strengthened region 5 (silicon nitride particles 6 whose centers of gravity are on or within 1 $\mu$m from the edge), there are silicon nitride particles 6 whose major axis is smaller than the major axis of the grain boundary phase strengthened region 5. Furthermore, it is desirable that the number ratio of silicon nitride particles 6 whose major axis (maximum value) is smaller than the major axis of the grain boundary phase strengthened region 5 among the silicon nitride particles 6 present on or within 1 $\mu$m from the edge of the grain boundary phase strengthened region 5 (silicon nitride particles 6 whose centers of gravity are on or within 1 $\mu$m from the edge) is 5% or more and 60% or less. The sizes of the major axis of the silicon nitride particles 6 and the major axis of the grain boundary phase strengthened region are also measured using an SEM image at 5000 times magnification.

The silicon nitride sintered compact thus obtained is preferably controlled in terms of the linear expansion coefficient and average linear expansion coefficient. The linear expansion coefficient (%) from room temperature to the measurement temperature and the average linear expansion coefficient are calculated by the following formulas (6) and (7).

$$\text{Linear expansion coefficient (\%) = }\Delta L \text{ / } Lr * 100 \ldots (6)$$

Average linear expansion coefficient = (Linear expansion coefficient (%) * 0.01) / temperature change (°C)    (7)

Here, in formulas (6) and (7), "Lr" is the height of the sample at room temperature, and "$\Delta L$" is the amount of expansion of the sample from room temperature to the measurement temperature.

The linear expansion coefficient (%) at -189°C, when 20°C is set to 0, is preferably -0.01% or more and 0.01% or less.

The average linear expansion coefficient at -189°C to 20°C is preferably 0.1 x $10^{-6}$/°C or more and 1.5 x $10^{-6}$/°C or less.

As described above, the silicon nitride sintered compact having a controlled linear expansion coefficient and average linear expansion coefficient from -189°C to 20°C can be used under various low-temperature conditions. It may also be used as an all-ceramic bearing in which ceramics are used for each component of the bearing.

It is preferable that the cross section or surface of the silicon nitride sintered compact has a lightness L* of 10 or more and 30 or less, and a chroma C of 30 or less in the L*a*b* color system of JIS_Z_8729. As mentioned above, by controlling the color of the surface or cross section, it becomes easier to find pores and other abnormalities such as large segregations.

The acute angles can be confirmed by an SEM image of the grain boundary phase strengthened region 5 magnified 5000 times. When the titanium nitride particles of the present invention are measured using this measurement method, they appear substantially spherical or ellipsoidal, close to spherical, regardless of the direction from which they are measured, with almost no acute angles of 90° or less being confirmed. The silicon nitride sintered compact of the present invention, in which such titanium nitride is dispersed, shows no variation in the strengthening state of the grain boundary phase. Therefore, the silicon nitride sintered compact can be applied to various wear-resistant components, and is particularly suitable for bearing components that serve as sliding parts, such as bearing balls (approximately spherical), rollers, and races.

Next, the silicon nitride wear-resistant member according to the present invention includes 2% by mass or more and 20% or less by mass of a grain boundary phase made of a Si-rare earth element-Al-O-N compound. If the amount of the grain boundary phase is less than 2% by mass, the silicon nitride sintered compact will not be sufficiently densified, making it difficult to achieve a porosity of 0.5% or less.

On the other hand, if the amount of the grain boundary phase exceeds 20 mass%, the grain boundary phase becomes excessive, which reduces the bending strength, fracture toughness, and rolling life of the silicon nitride sintered compact. Therefore, the amount of the grain boundary phase consisting of Si-rare earth element-Al-O-N based compounds is 2 mass% or more and 20 mass% or less, preferably 5 mass% or more and 15 mass% or less.

Although there are no particular limitations on the method for forming the grain boundary phase consisting of Si-rare earth element-Al-O-N based compounds, it is preferable to add components that form such grain boundary phases as sintering aids. Adding rare earth compounds and aluminum compounds is effective.

The rare earth compound is not particularly limited, but preferably includes an oxide, nitride, boride, carbide, or silicide of one or more rare earth elements selected from yttrium (Y), lanthanum (La), ytterbium (Yb), cerium (Ce), samarium (Sm), neodymium (Nd), dysprosium (Dy), erbium (Er), and lutetium (Lu). Because rare earth compounds readily form Si-rare earth element-Al-O-N grain boundary phases, it is more preferable for them to include an oxide of one or more elements selected from yttrium, ytterbium, cerium, neodymium, samarium, and erbium. Furthermore, "one or more elements" may refer to either a single element or a mixture of two or more elements.

The aluminum compound is not particularly limited as long as it includes aluminum, but is preferably one or more of alumina (aluminum oxide) and aluminum nitride. These aluminum compounds are likely to form a grain boundary phase consisting of a Si-rare earth element-Al-O-N compound during sintering, and when both alumina and aluminum nitride are added, the grain boundary phase consisting of a Si-rare earth element-Al-O-N compound is more likely to form. The constituent components of the grain boundary phase can be measured using EDX or the like.

The amounts of rare earth compound and aluminum compound added are not particularly limited as long as the amount of the grain boundary phase consisting of Si-rare earth element-Al-O-N compound in the final silicon nitride sintered compact is 2% by mass or more and 20% by mass or less, but the amount of rare earth compound is 10% by mass or less and the amount of aluminum compound is 10% by mass or less. In the case of aluminum compound, when aluminum oxide and aluminum nitride are used in combination, the amount of aluminum nitride is preferably 7% by mass or less, and more preferably 3% by mass or less.

If necessary, a magnesium compound may be mixed. The magnesium compound is preferably mixed in an amount of 0 mass % or more and 5 mass % or less. Furthermore, the mass ratio of the aluminum compound and the mass ratio of the magnesium compound (e.g., magnesium oxide) preferably satisfy the following formulas (8) and (9) in terms of compounds.

When aluminum compounds are included in a silicon nitride sintered compact, the total mass proportion of the aluminum compounds is defined as Wa, and the total mass proportion of the grain boundary phase strengthened regions 5 (e.g., titanium nitride) is defined as Wp. The relationship between the total mass proportion Wa of the aluminum compounds and the total mass proportion Wp of the grain boundary phase strengthened regions 5 is given by the following formula (8). Furthermore, the mass proportion of the magnesium compounds is defined as Wm. The relationship between the total mass proportion Wm of the magnesium compounds and the total mass proportion Wp of the grain boundary phase strengthened regions 5 is given by the following formula (9).

$$0.5 \leq Wa / Wp \leq 20 \ldots (8)$$

$$0 \leq Wm / Wp \leq 5 \ldots (9)$$

The above description focuses on the grain boundary phase consisting of titanium nitride and Si-rare earth element-Al-O-N compounds, which are essential components of the silicon nitride wear-resistant member according to the present invention. However, it goes without saying that other components may be added to the silicon nitride sintered compact that constitutes the silicon nitride wear-resistant member according to the present invention.

For example, it is effective to add oxides, nitrides, borides, or silicides of magnesium or the like to further densify the material. Magnesium oxide is particularly effective for densification. A small amount of silicon carbide may also be added.

The porosity is preferably 0.5% or less, and even more preferably 0.4% or less. Furthermore, the major axis diameter of the pores is 3 $\mu$m or less, and even more preferably 2 $\mu$m or less. If the porosity and the major axis diameter of the pores are outside the range, the bending strength and rolling life will decrease.

Next, a method for manufacturing the silicon nitride sintered compact (wear-resistant member) according to the present invention will be described. The silicon nitride wear-resistant member according to the present invention can be manufactured by any method as long as it can obtain the predetermined grain boundary phase strengthened metal particles (e.g., titanium nitride particles) and the predetermined grain boundary phase structure described above. For example, the following method is effective.

First, silicon nitride raw material powders are known to be of the $\alpha$-phase type and the $\beta$-phase type. The $\alpha$-phase type is suitable as the raw material powder for the silicon nitride sintered compact of the present invention. The $\alpha$-phase is preferably present in the silicon nitride raw material powder at 80 mass% or more, and more preferably at 90 mass% or more. Therefore, the $\beta$-phase may be present in an amount of 0 mass% or more but less than 20 mass%, and it is more preferable that the proportion of the $\beta$-phase be 0 mass% or more but less than 10 mass%.

The silicon nitride raw material powder has an average particle size of 1.0 $\mu$m or less, preferably 0.4 $\mu$m or more and 0.8 $\mu$m or less. The oxygen content in the silicon nitride raw material powder is preferably 2.0 mass% or less, more preferably 0.2 mass% or more and 1.5 mass% or less.

If the amount of silicon nitride is less than 75% by mass, assuming that the total weight of the sintering aid powder and silicon nitride powder is 100% by mass, the amount of sintering aid, including the components that ultimately form titanium nitride, will be too large, resulting in deterioration of the flexural strength, fracture toughness, rolling life, and other properties of the sintered compact.

Conversely, if the amount of silicon nitride exceeds 97% by mass, the amount of sintering aid added will be too small, and the effect of adding the sintering aid will not be fully achieved. Therefore, the amount of silicon nitride is preferably 75% by mass or more and 97% by mass or less. It is more preferably 80% by mass or more and 95% by mass or less. The silicon nitride powder used may be silicon nitride powder produced by a direct nitriding method, silicon nitride powder produced by an imide decomposition method, or silicon nitride powder produced by a combustion synthesis method.

By using silicon nitride powder that is fine and low in impurities, with an average particle size of 1 $\mu$m or less and an oxygen content of 2.0 mass % or less, with an $\alpha$ phase of 90 mass % or more and a specific surface area of 2 $m^2$/g or more and 13 $m^2$/g or less, it becomes easier to obtain a high-strength silicon nitride sintered compact with small porosity and maximum pore size.

The impurities referred to here particularly include carbon, iron, aluminum, calcium, etc. The content of these impurities is preferably below the following levels.

Carbon is preferably 0.4 mass% or less, aluminum is preferably 3000 ppm or less, iron is preferably 2000 ppm or less, and calcium is preferably 2000 ppm or less.

By using the silicon nitride raw material powder described above, the dispersibility of the multiple grain boundary phase strengthened regions 5 can be further improved.

When the raw material powder of the grain boundary phase strengthened metal or compound that constitutes the grain boundary phase strengthened region 5 is titanium nitride, there are no particular limitations on the titanium compound as long as it can ultimately produce a titanium nitride particle size of 2 $\mu$m or less, but the average particle size is preferably 1.0 $\mu$m or less, and more preferably 0.5 $\mu$m or less. Furthermore, it is preferable that the raw material powder of the added grain boundary phase strengthened metal has a high purity. The purity of the raw material powder is preferably 90% by mass or more, more preferably 99% by mass or more, and even more preferably 99.9% by mass or more.

If the purity of the raw material is low, it may be difficult to control the amount of raw material added to the grain boundary phase strengthened metal, so the purity is preferably 90 mass % or more.

In particular, when titanium nitride is used as the grain boundary phase strengthened metal or compound that constitutes the grain boundary phase strengthened region 5, if a compound other than titanium nitride, such as titanium oxide, that converts to titanium nitride through a reaction during sintering is used as the raw material, it is preferable to use a fine powder with an average particle size of 1.0 $\mu$m or less. In this case, it becomes easier to make the particle size derived from the average values of the major and minor axis diameters of the grain boundary phase strengthened region 5 made of titanium nitride or the like in the final silicon nitride sintered compact 2 $\mu$m or less.

It is preferable to use fine powders of rare earth compounds and aluminum compounds, or other additives, with an average particle size of 2 $\mu$m or less.

It is preferable to use powdered raw materials rather than those having thorn-like protrusions on the surface, such as fibers or whiskers, because, as mentioned above, the use of fibers or whiskers may reduce the dispersibility of the multiple grain boundary phase strengthened regions 5, which may reduce wear resistance, such as rolling life.

Predetermined amounts of various raw material powders are added and mixed, then molded into a predetermined shape and degreased to produce a molded compact (also called a "degreased molded compact" or "degreased compact"). The raw material powders are mixed so that the titanium compound in particular is uniformly dispersed. It is preferable to add raw material powders such as silicon nitride raw material powder or an auxiliary agent, which is one or more grain boundary phase strengthened metals selected from molybdenum, tungsten, niobium, titanium, hafnium, zirconium, tantalum, vanadium, and chromium, either singly or as a compound, in multiple batches. Only the components forming the grain boundary phase strengthened regions 5, such as titanium oxide, may be premixed first. Alternatively, the components forming the grain boundary phase strengthened regions 5 may be premixed with silicon nitride powder first. Furthermore, only the auxiliary agent may be premixed first. This prevents aggregation of multiple grain boundary phase strengthened regions 5, such as titanium nitride, after sintering, and facilitates the formation of a single, dispersed state. When adding multiple batches, it is particularly effective to add each batch at an interval of at least 30 minutes. In addition, the timing of adding the liquid component (binder or solvent) and the powder component in the premixing may be devised.

By ensuring sufficient surface wettability of the auxiliary agent before mixing with the silicon nitride powder and the remaining auxiliary agent, a more uniformly dispersed grain boundary phase strengthened regions 5 can be obtained. Adding the auxiliary agent in multiple batches, as described above, can produce a more uniform mixed slurry. Furthermore, by performing the mixing process described above, the dispersibility of particles or regions in the multiple grain boundary phase strengthened regions 5 can also be controlled. Furthermore, the grain boundary phase strengthened metal or compound constituting the grain boundary phase strengthened regions 5 is preferably 0.1 mass% or more and 9 mass% or less in terms of the metal alone. If the grain boundary phase strengthened metal exceeds 9 mass% in terms of the metal alone, the included multiple grain boundary phase strengthened regions 5 may aggregate and be insufficiently dispersed, potentially making it difficult to obtain the benefits of providing the grain boundary phase strengthened regions 5. On the other hand, if the grain boundary phase strengthened metal is less than 0.1 mass% in terms of the metal alone, the amount of particles forming the grain boundary phase strengthened regions 5 may be insufficient, resulting in a risk of insufficient improvement in dispersibility. More preferably, the grain boundary phase strengthened metal is present in an amount of 0.1 to 4 mass % in terms of simple metal. The smaller the amount of grain boundary phase strengthened metal added, the smaller the effect on the linear expansion coefficient can be.

It is preferable to control the thixotropy of the raw material powder slurry. Thixotropy is the property of a non-Newtonian slurry having time-dependent flow characteristics, whereby the apparent viscosity decreases over time at a constant shear rate and gradually recovers when the force is removed. It is thought to reflect the internal structure of the fluid, such as whether the slurry particles are agglomerated. JIS-R-1665 (2005) specifies the evaluation of thixotropy by measuring the hysteresis of the flow curve.

Thixotropy is expressed by the thixotropy index (TI value). The TI value is measured using a rotational viscometer in accordance with JIS-R-1665. When the shear rate is continuously increased using a rotational viscometer, the viscosity of a fluid that has aggregation generally decreases. In this case, the ratio of the viscosity $\eta_a$ at shear rate a to the viscosity $\eta_b$

at shear rate b is the TI value. In other words, the TI value is expressed by the following formula.

$$TI\ value\ =\ \eta_a/\eta_b$$

Measurements are performed with a shear rate a of 6 (s$^{-1}$) and a shear rate b of 60 (s$^{-1}$). The closer the TI value is to 1, the closer the slurry behaves to a Newtonian fluid, indicating a highly dispersed slurry with no or very little aggregation.

The raw powder slurry should preferably have a viscosity $\eta_b$ at shear rate b of 1000 mPa·s or less, and a TI value in the range of 1 or more and 1.5 or less. Suppressing aggregation at the slurry stage is effective. This improves the dispersion of compounds such as Ti compounds, which are grain boundary phase-strengthened metal compounds.

A compact is obtained from the slurry obtained as described above. For example, the slurry is powdered using spray drying or the like. In this process, the slurry is not allowed to stand, but the dispersion equilibrium is controlled under low-load mixing conditions, thereby suppressing aggregation during the drying process. The slurry is then molded using one or more molding methods, including tumbling granulation, die molding, and CIP. An example of using one or more molding methods is a combination of die molding and CIP (Cold Isostatic Pressing). A CIP-treated compact (also called a "CIP compact") can be produced by subjecting a compact produced by die molding to CIP treatment.

Next, the compact (including the CIP compact) is subjected to a degreasing process. The degreasing process preferably has a temperature holding region where a certain temperature range is maintained. This certain temperature range is preferably 400°C to 600°C under an atmosphere such as N2, atmospheric pressure, vacuum, or heated steam. The average cooling rate during the degreasing process is preferably 10°C/h or more and 300°C/h or less.

It is also preferable that the nitrogen partial pressure be 95% or higher and the oxygen partial pressure be less than 5%. It is even more preferable that the oxygen partial pressure be 3% or lower. This reduces the rate of thermal decomposition of the organic components added to the slurry, making the degreasing compact less likely to crack.

Next, we will explain the sintering process for compacts (including CIP compacts and degreased compacts). When sintering a compact, it is first held under reduced pressure at 1200°C to 1500°C for a predetermined period of time, and then sintered at 1600°C to 1900°C. An inert atmosphere of 1 atmosphere or less is desirable during this holding process. In particular, a pressure of 0.5 atmospheres or less facilitates the removal of unwanted gaseous components from the compact, such as traces of carbon remaining in the degreasing process of organic substances added to produce silicon nitride compacts, thereby facilitating the production of sintered compacts with low porosity. The holding time at 1200°C to 1500°C is preferably 30 minutes to 120 minutes. If the holding temperature is not sufficiently maintained at 1200°C to 1500°C, a temperature difference will occur between the inside and outside of the sintered compact, leading to cracks due to thermal stress differences. Furthermore, by slowly increasing the temperature and holding it until it reaches 1500°C, the reaction of the grain boundary phase strengthened metal compound, for example, the reaction of titanium oxide to titanium nitride, is completed before the silicon nitride begins to beta phase. If the temperature is not held at 1200°C or higher but 1500°C or lower for the specified time, the phase change of titanium nitride tends to proceed while variations occur between the inside and outside of the sintered compact, which also leads to internal nonuniformity in the silicon nitride sintered compact. As a result, the effect of improving strength is reduced.

The holding time is preferably about 30 minutes to 120 minutes, and by performing the holding process in combination with the above-mentioned holding temperature, it is possible to form a grain boundary phase strengthened region 5 made of titanium nitride or the like with controlled properties. For example, when a titanium compound such as titanium oxide is converted to titanium nitride by a nitriding reaction, differences in the holding temperature and holding time will cause variations in the conversion rate from titanium oxide to titanium nitride, which will deteriorate various properties such as the strength of the silicon nitride sintered compact.

In other words, by providing a holding treatment consisting of a predetermined holding time and temperature, it is possible to suppress variation in the conversion rate of titanium oxide to titanium nitride. This conversion can be, for example, converting titanium oxide to titanium nitride. In this way, it is possible to suppress variation in the size of the multiple grain boundary phase strengthened regions 5 (e.g., each titanium nitride region). As a result, it is possible to suppress the grain size of titanium nitride to 2 $\mu$m or less and the difference between the major axis diameter and the minor axis diameter to 1 $\mu$m or less.

The atmosphere during the holding treatment is preferably an inert atmosphere of 1 atmosphere or less. In particular, if the atmosphere is 0.5 atmosphere or less, unnecessary gas components, such as trace amounts of carbon components remaining in the degreasing treatment of organic substances added to produce silicon nitride molded compacts, can be easily removed, making it easier to obtain a sintered compact with low porosity.

Next, up to 1600°C, sintering densification progresses most rapidly, and this temperature region promotes the beta phase transformation of the silicon nitride particles. The nitrogen atmosphere is preferably at approximately atmospheric pressure. This allows the grain boundary phase strengthened regions 5 to be confined by the silicon nitride columnar grains while maintaining good dispersion.

Furthermore, by increasing the pressure of the surrounding nitrogen atmosphere above 1600°C and sintering at a temperature between 1600°C and 1900°C, it is possible to obtain a silicon nitride sintered compact. A pressure of 2.0 atmospheres or more and 9.0 atmospheres or less is preferable. This also suppresses the decomposition behavior of silicon nitride itself. Various sintering methods can be applied for this sintering, including pressure sintering (hot press) and HIP (Hot Isostatic Pressing) sintering, in addition to atmospheric pressure sintering. Furthermore, it is also possible to combine multiple methods, such as performing HIP treatment after atmospheric pressure sintering.

In particular, when the material is applied to a bearing member such as the bearing ball 1, it is effective to further perform HIP treatment after pressure sintering, and the HIP treatment is preferably performed under conditions of 300 atmospheres or more and 1600°C to 1850°C.

In this way, in the present invention, the raw materials for obtaining the grain boundary phase strengthened regions 5 are added and mixed in multiple batches, and the auxiliary powder is mixed in advance before mixing with the silicon nitride powder. In addition, in the present invention, mixing and drying are performed to maintain dispersibility in the granulation process. Furthermore, in the present invention, a sintering process that promotes beta phase transformation is combined after the formation of the grain boundary phase strengthened regions 5. It has been discovered that these methods make it possible to improve the dispersibility of the multiple grain boundary phase strengthened regions 5.

The silicon nitride sintered compact obtained as described above can be suitably used at cryogenic temperatures such as -200°C, and can also be suitably used at room temperature (25°C). Furthermore, in bending strength tests, it can be suitably used in combination with SUJ2 between room temperature and -200°C, and is characterized by a three-point bending strength at -200°C being 50 MPa or more greater than the three-point bending strength at room temperature (25°C). Furthermore, the absolute value of the three-point bending strength at room temperature (25°C) is preferably 900 MPa or more. Furthermore, according to the present invention, the linear expansion coefficient (%) of the silicon nitride sintered compact at room temperature (20°C) can be set to a value of -0.01% or more and 0.01% or less at -189°C, taking the linear expansion coefficient (%) at room temperature (20°C) as the reference (0). As mentioned above, a small absolute value of the linear expansion coefficient indicates little change in volume. A small change in volume means that when used as a wear-resistant component in a cryogenic environment, even if a temporary temperature change occurs due to external factors, there is little change in volume, making it easy to use.

When the silicon nitride sintered compact is used as a wear-resistant member, it goes without saying that the silicon nitride sintered compact is subjected to finishing processes such as surface polishing and coating treatment as necessary. In other words, when the silicon nitride sintered compact can be used as a wear-resistant member as it is, the silicon nitride sintered compact is synonymous with "a wear-resistant member made of silicon nitride."

(Example 1)

Silicon nitride powder with a controlled $\alpha$ phase transition rate was used. The silicon nitride powder ratio was adjusted to 80% by mass or more and 95% by mass or less. Auxiliary agent raw material powders were prepared separately.

The auxiliary agent and solvent were mixed in advance for the prepared raw material powders.

Using multiple organic solvents as the solvent allows for a more uniform granulated powder. A dispersant may also be used as needed.

The raw material mixture was prepared by wet mixing for 72 hours using a bead mill or ball mill.

Next, a predetermined amount of organic binder was added to the obtained raw material powder mixture to obtain a slurry. The slurry was adjusted so that its viscosity at a shear rate of 60/s was 1000 mPa·s or less and its TI value was 1 or more and 1.5 or less. The obtained slurry was not left to stand, but was continuously mixed at low load using a mixer to granulate while suppressing aggregation during the drying process. The obtained granulated powder was press-molded by uniaxial pressure at a molding pressure of 1000 kg/cm$^2$ to produce a large number of spheres as samples for measuring bending strength and rolling life.

Next, each of the obtained molded compacts was degreased for 4 hours in an air stream at 400°C to 600°C. Thereafter, the degreased molded compact was subjected to a holding treatment at 1350°C for 1 hour at 0.1 atmospheres in a nitrogen gas atmosphere. Thereafter, the temperature was raised to 1600°C and then the nitrogen gas atmosphere was pressurized to 7 atmospheres. Thereafter, the degreased molded compact was sintered at 1750°C for 4 hours. Next, the obtained sintered compact was subjected to a HIP treatment at 1700°C for 1 hour at 1000 atmospheres in a nitrogen gas atmosphere, thereby preparing a silicon nitride sintered compact according to Example 1.

(Example 2-9)

The manufacturing method for the silicon nitride sintered compact (silicon nitride wear-resistant member) in Example 2-9 was the same as the manufacturing method for the silicon nitride sintered compact (silicon nitride wear-resistant member) in Example 1, except that the type or amount of additive was changed.

(Comparative Examples 1-5)

The manufacturing methods for the silicon nitride sintered compact (silicon nitride wear-resistant member) in Comparative Examples 1, 3, and 4 were the same as those for the silicon nitride sintered compact (silicon nitride wear-resistant member) in Example 1, except that no grain boundary phase strengthened metal (compound or element) was added and the mixing ratio of auxiliary agents was different.

The manufacturing method for the silicon nitride sintered compact (silicon nitride wear-resistant member) in Comparative Example 2 was the same as that for the silicon nitride sintered compact (silicon nitride wear-resistant member) in Example 1, except that the mixing ratio of auxiliary agents was different.

The method for producing the silicon nitride sintered compact (wear-resistant member made of silicon nitride) according to Comparative Example 5 was the same as the method for producing the silicon nitride sintered compact (wear-resistant member made of silicon nitride) according to Example 1, except that the slurry was produced without premixing only the auxiliary agent for $TiO_2$, and the $TiO_2$ content was high.

The compositional proportions of the silicon nitride sintered compacts thus obtained according to Examples 1 to 9 and Comparative Examples 1 to 5 are shown in Table 1. The number before each compound name in Table 1 indicates the content (wt%) of the auxiliary compound when silicon nitride is taken as 100 wt%.

[Table 1]

| | Sample and Composition |
|---|---|
| Example 1 | $5Y_2O_3$-$4Al_2O_3$-$3AlN$-$1.5TiO_2$ |
| Example 2 | $3.5Y_2O_3$-$3Al_2O_3$-$2.5AlN$-$5SiC$-$2HfO_2$-$1Mo_2C$ |
| Example 3 | $3Y_2O_3$-$8Al_2O_3$-$3Mo_2C$ |
| Example 4 | $5Y_2O_3$-$4Al_2O_3$-$3AlN$-$0.8WC$ |
| Example 5 | $5Y_2O_3$-$3Al_2O_3$-$2.5AlN$-$0.5WC$ |
| Example 6 | $5Y_2O_3$-$2.0Al_2O_3$-$2.5AlN$-$0.4WC$-$0.8MgO$ |
| Example 7 | $5Y_2O_3$-$2.0Al_2O_3$-$2.5AlN$-$0.5WC$-$0.9MgO$ |
| Example 8 | $3AlN$-$6ZrN$ |
| Example 9 | $Y_2O_3$-$4Al_2O_3$-$3AlN$-$1.OTiO_2$ |
| Comparative Example 1 | $Y_2O_3$-$Al_2O_3$-$MgO$ |
| Comparative Example 2 | $3Y_2O_3$-$2MgO$-$6TiO_2$ |
| Comparative Example 3 | $3.2Y_2O_3$-$1.4Al_2O_3$ |
| Comparative Example 4 | $5Y_2O_3$-$2Al_2O_3$-$5AlN$ |
| Comparative Example 5 | $3Y_2O_3$-$2MgO$-$4TiO_2$ (No premixing) |

For the silicon nitride sintered compacts according to Examples 1 to 9, the number of other grain boundary phase strengthened regions 5B was counted in the same field of view using both SEM and SEM-EDX. The magnification was 5000x. The SEM used was a JEOL JSM-7200F Schottky field emission scanning electron microscope. A JEOL JED-2300T energy dispersive X-ray analyzer was used for EDX. The number of other grain boundary phase strengthened regions 5B present within doughnut-shaped regions of interest 11 and 12 centered on the center of gravity CA of the reference grain boundary phase strengthened region 5A was counted. This process was performed with different reference grain boundary phase strengthened regions 5A, thereby obtaining the number of three other grain boundary phase strengthened regions 5B corresponding to each of the three (m = 3) reference grain boundary phase strengthened regions 5A. The three counts were then averaged to obtain the average number. The three reference grain boundary phase strengthened regions 5A were spaced apart from each other by 100 $\mu$m or more.

When a reference grain boundary phase strengthened region 5A is selected, the number of other grain boundary phase strengthened regions 5B present within the regions of interest 11 and 12 refers to the number of other grain boundary phase strengthened regions 5B present within the regions of interest 11 and 12. The "within the regions of interest 11 and 12" refers to a range that is more than a certain distance away from the reference grain boundary phase strengthened region 5A but is within another certain distance. The position of the other grain boundary phase strengthened regions 5B was determined based on their centers of gravity CB, and they were counted if their centers of gravity CB were within the regions of interest 11 and 12. The number of other grain boundary phase strengthened regions 5B within each of the regions of interest 11 and 12 is listed in Table 2 according to the respective ranges. The average number was also obtained for the silicon nitride sintered compacts of Comparative Examples 1 to 5, in the same way as for the silicon nitride sintered compacts of Examples 1 to 9.

[Table 2]

| | The Average Number of Other Grain Boundary Phase Strengthening Regions (The Average of 3 corresponding to 3 Reference Grain Boundary Phase Strengthening Regions) | |
| --- | --- | --- |
| | Radius of 2-9um (First Region of interest) | Radius of 3-7um (Second Region of interest) |
| Example 1 | 14 | 6 |
| Example 2 | 12 | 7 |
| Example 3 | 27 | 15 |
| Example 4 | 3 | 1 |
| Example 5 | 27 | 15 |
| Example 6 | 10 | 3 |
| Example 7 | 10 | 5 |
| Example 8 | 38 | 19 |
| Example 9 | 12 | 5 |
| Comparative Example 1 | 0 | 0 |
| Comparative Example 2 | 1 | 0 |
| Comparative Example 3 | 0 | 0 |
| Comparative Example 4 | 0 | 0 |
| Comparative Example 5 | 1 | 1 |

Next, the three-point bending strength was determined at room temperature (20°C) and at a cryogenic temperature (-196°C) for the silicon nitride sintered compacts according to Examples 1 to 9 and Comparative Examples 1 to 5. The three-point bending strengths determined at each temperature are shown in Table 3. The three-point bending strengths shown in Table 3 are in units of [MPa]. The bending strength was measured using a precision universal testing machine (Model AG100kNG/XR manufactured by Shimadzu Corporation) at -196°C, and a precision universal testing machine (Model 5567 manufactured by Instron) at 20°C (room temperature).

[Table 3]

| | Three-Point Bending Strength [MPa] | |
| --- | --- | --- |
| | -196 °C | 20 °C (Room Temperature) |
| Example 1 | 1477 | 1249 |
| Example 2 | 1237 | 1050 |
| Example 3 | 1210 | 950 |
| Example 4 | 1240 | 1150 |
| Example 5 | 1250 | 1180 |
| Example 6 | 1220 | 1160 |
| Example 7 | 1270 | 1190 |
| Example 8 | 1080 | 940 |
| Example 9 | 1350 | 1200 |
| Comparative Example 1 | 1160 | 1177 |

(continued)

| | Three-Point Bending Strength [MPa] | |
| --- | --- | --- |
| | -196 °C | 20 °C (Room Temperature) |
| Comparative Example 2 | 955 | 947 |
| Comparative Example 3 | 910 | 900 |
| Comparative Example 4 | 905 | 880 |
| Comparative Example 5 | 905 | 890 |

As shown in Table 1, the silicon nitride sintered compacts (silicon nitride wear-resistant members) of Comparative Examples 1, 3, and 4 did not include a grain boundary phase strengthened metal.

As shown in Table 1, the silicon nitride sintered compact (silicon nitride wear-resistant member) of Comparative Example 2 included a grain boundary phase strengthened metal, but the amount of grain boundary phase strengthened metal (titanium oxide in this case) was greater than the amount of other auxiliary agents (excluding rare earths).

Furthermore, as shown in Table 1, with regard to the manufacturing method, only the silicon nitride sintered compact (silicon nitride wear-resistant member) of Comparative Example 5 was not pre-mixed with only the auxiliary agents.

The number of other grain boundary phase strengthened regions 5B present within the first region of interest 11 was counted, and when obtaining the average number of the three, the average number of the other grain boundary phase strengthened regions 5B was obtained. The first region of interest 11 is a region outside a circle P1 having a radius of 2 $\mu$m from the center of gravity CA of the reference grain boundary phase strengthened region 5A and inside a circle Q1 having a radius of 9 $\mu$m from the center of gravity CA of the reference grain boundary phase strengthened region 5A. It was also obtained whether this average number was 4 or more and 30 or less (the above formula (2)). In Examples 1-3, 5-7, and 9, the average number of the three corresponding to the three reference grain boundary phase strengthened regions 5A was within the range of 4 or more and 30 or less. On the other hand, in the silicon nitride sintered compacts of Examples 4 and 8, the average number was outside the range of 4 or more and 30 or less.

The number of other grain boundary phase strengthened regions 5B present within the second region of interest 12 was counted, and the average number of the three counts was obtained. The second region of interest 12 is a region located outside a circle P2 having a radius of 3 $\mu$m from the center of gravity CA of the reference grain boundary phase strengthened region 5A, and inside a circle Q2 having a radius of 7 $\mu$m from the center of gravity CA of the reference grain boundary phase strengthened region 5A. In Examples 1-3 and 5-7-9, the average number was within the range of 2 to 20 (the above formula (4)). On the other hand, in the silicon nitride sintered compact of Example 4, the average number was outside the range of 2 or more and 20 or less.

In the silicon nitride sintered compacts of Examples 1, 2, and 5, the difference in the number of the other three grain boundary phase strengthened regions 5B present in each of the three first regions of interest 11 corresponding to the three reference grain boundary phase strengthened regions 5A was all 5 or less. Furthermore, in the silicon nitride sintered compacts of Examples 1, 2, and 5, the difference in the number of the other three grain boundary phase strengthened regions 5B present in each of the three second regions of interest 12 corresponding to the three reference grain boundary phase strengthened regions 5A was all 3 or less.

Table 2 shows the number of other grain boundary phase strengthened regions 5B in each of the target regions (doughnut-shaped regions) 11 and 12. All of Examples 1 to 9 satisfied the range of formula (1).

Furthermore, for the silicon nitride sintered compacts of Comparative Examples 1, 3, and 4, no raw material including a grain boundary phase strengthened metal was added, so the number of other grain boundary phase strengthened regions 5B was zero. On the other hand, in Comparative Example 2, the grain boundary phase strengthened metal was included in a higher amount than the other additives, which caused aggregation, resulting in a low number of other grain boundary phase strengthened regions 5B counted. Furthermore, for the silicon nitride sintered compacts of Comparative Examples 1, 3, and 4, the size of the grain boundary phase strengthened regions 5 was larger than for the silicon nitride sintered compacts of Examples 1 to 9. Furthermore, for the silicon nitride sintered compact of Comparative Example 5, the additives alone were not premixed, resulting in a lack of uniform mixing and thus not satisfying the range of formula (1). At this time, the shape of each grain boundary phase strengthened region 5 was also confirmed, and it was found to be a rounded shape with few irregularities and no sharp corners.

Next, let us consider the results in Table 3. In Examples 1 to 9, which satisfied the range of formula (1), the bending strength at room temperature was high, at 940 MPa or more, and furthermore, when the difference between the bending strength at -196°C (minus 196 degrees Celsius) and the bending strength at room temperature (20°C: 20 degrees Celsius) was calculated, it was found that the bending strength at -196°C was greater, with a difference of 60 MPa or more. In other words, it was found that the bending strength was excellent whether at an extremely low temperature such as -196°C or at room temperature.

Further explanation will be given for Table 4.

The lightness and saturation of the surface or cross section were investigated using the L*a*b* color system in JIS Z 8729. The equipment used was a Konica Minolta spectrophotometer CM-M6. If the lightness L* was within the range of 10 or more and 30 or less, it was recorded as "O" in the lightness column. On the other hand, if it was outside this range, it was recorded as "X" in the lightness column. Furthermore, if the saturation C was 30 or less, it was recorded as "O" in the saturation column. On the other hand, if it was outside this range, it was recorded as "X" in the saturation column.

The linear expansion coefficient was measured at -200°C, with the linear expansion coefficient at 25°C set to 0. The linear expansion coefficient was measured using a vertical thermal dilatometer "TM-7000" manufactured by Shinku Riko. A linear expansion coefficient of -0.008% or more and 0% or less was marked as "OO", and a linear expansion coefficient of -0.01% or more but less than -0.008% was marked as "O". A linear expansion coefficient of -0.1% or more but less than -0.01%, or a linear expansion coefficient exceeding 0 but less than 0.01%, was marked as "Δ". A linear expansion coefficient other than the above was marked as "X".

[Table 4]

|  | Color | | Linear Expansion Coefficient |
|---|---|---|---|
|  | Lightness | Saturation |  |
| Example 1 | O | O | OO |
| Example 2 | O | O | OO |
| Example 3 | O | O | OO |
| Example 4 | O | O | OO |
| Example 5 | O | O | O |
| Example 6 | O | x | O |
| Example 7 | x | O | O |
| Example 8 | x | x | Δ |
| Example 9 | O | O | x |
| Comparative Example 1 | X | X | O |
| Comparative Example 2 | X | X | x |
| Comparative Example 3 | X | X | x |
| Comparative Example 4 | X | X | x |
| Comparative Example 5 | X | X | x |

Referring to Table 4, the silicon nitride sintered compacts of Examples 1-4 also satisfied the preferred range for color (lightness and saturation), and also satisfied the most preferred range for linear expansion coefficient, marked "OO". The silicon nitride sintered compact of Example 5 was within the preferred range for color (lightness and saturation), and its linear expansion coefficient was also within the more preferred range, marked "O". Examples 6 and 7 were outside the preferred range for color (lightness and saturation) (either one was outside the preferred range), marked "X", but also within the more preferred range for linear expansion coefficient, marked "O".

The silicon nitride sintered compact of Example 8 was outside the preferred range for color (lightness and saturation), marked "X" (out of both ranges), but its linear expansion coefficient was also within the preferred range, marked "Δ".

The silicon nitride sintered compact of Example 9 was within the preferred range for color (lightness and saturation), marked "O", but also within the preferred range for linear expansion coefficient, marked "X".

The silicon nitride sintered compacts according to Comparative Examples 1-5 were outside the preferred range for color (brightness and saturation) (both were outside the preferred range). The silicon nitride sintered compact according to Comparative Example 1 was within a more preferred range for linear expansion coefficient. On the other hand, the silicon nitride sintered compacts according to Comparative Examples 2-5 were outside the preferred range for linear expansion coefficient, marked "X".

As mentioned above, by controlling the linear expansion coefficient within the most preferable range, the absolute value of the linear expansion coefficient can be controlled to be small, which results in a bearing ball that is easy to use and whose volume does not change much even when it is rapidly cooled at extremely low temperatures.

According to the present invention, it is possible to provide a silicon nitride sintered compact, a wear-resistant member, a bearing ball, and a bearing having excellent bending strength at cryogenic temperatures of approximately -200°C. It is because the silicon nitride sintered compact has such excellent bending strength, even when SUJ2-standard bearing steel is used in the bearing, the bending strength of the bearing ball does not change significantly at cryogenic temperatures compared to room temperature. Therefore, excellent wear resistance can be obtained at cryogenic temperatures. Due to this effect, when a bearing is manufactured by combining SUJ2-standard bearing steel, which is commonly used, it is possible to provide a bearing in which the bending strength ratio between the bearing ball and the bearing steel changes little between room temperature and cryogenic temperatures (e.g., -200°C). This makes it possible to provide a user-friendly bearing that can be used even at cryogenic temperatures (e.g., -200°C). Furthermore, when the silicon nitride sintered compact of the present invention is used as a wear-resistant member, grease may be used as needed, but it is not necessary. Furthermore, the grease used may be selected depending on the application.

The grain boundary phase strengthened metal of the silicon nitride sintered compact according to Examples 1 to 9 is an example including one or more metals selected from molybdenum, tungsten, titanium, hafnium, and zirconium, but is not limited to this case. For example, even if the grain boundary phase strengthened metal of the silicon nitride sintered compact includes one or more metals selected from niobium, tantalum, vanadium, and chromium, it is possible to acquire the same effects as those of the silicon nitride sintered compact according to Examples 1 to 9.

According to at least one of the embodiments described above, in addition to high strength and toughness, the bending strength is particularly excellent at cryogenic temperatures, and it is possible to improve the amount of volume change at cryogenic temperatures and the coefficient of thermal expansion (e.g., coefficient of linear expansion) when changed from room temperature (20°C) to -200°C.

While certain embodiments have been described, these embodiments have been presented by way of example only, and are not intended to limit the scope of the inventions. Indeed, the novel methods and systems described herein may be embodied in a variety of other forms; furthermore, various omissions, substitutions and changes in the form of the methods and systems described herein may be made without departing from the spirit of the inventions. The accompanying claims and their equivalents are intended to cover such forms or modifications as would fall within the scope and spirit of the inventions.

**Claims**

1. A silicon nitride sintered compact comprising: a silicon nitride particle; and multiple grain boundary phase strengthened regions including a grain boundary phase strengthened metal as a simple metal or a metal compound, wherein

   the grain boundary phase strengthened metal includes one or more elements selected from molybdenum, tungsten, niobium, titanium, hafnium, zirconium, tantalum, vanadium, and chromium, and
   in a cross section including a center of gravity of a reference grain boundary phase strengthened region among the multiple grain boundary phase strengthened regions, the number of other grain boundary phase strengthened regions present in a first region of interest that is outside a circle with a radius of 2 $\mu$m from the center of gravity and inside a circle with a radius of 9 $\mu$m from the center of gravity is 2 to 40.

2. The silicon nitride sintered compact according to claim 1, wherein the grain boundary phase strengthened metal is included in an amount of 0.1% by mass or more and 4% by mass or less in terms of simple metal.

3. The silicon nitride sintered compact according to claim 1 or 2, wherein the average number of the three other grain boundary phase strengthened regions present in each of the three first target regions corresponding to the three reference grain boundary phase strengthened regions as the reference grain boundary phase strengthened regions is 4 or more and 30 or less.

4. The silicon nitride sintered compact according to any one of claims 1 to 3, wherein in a cross section including the center of gravity of a reference grain boundary phase strengthened region among the multiple grain boundary phase strengthened regions, the number of other grain boundary phase strengthened regions present in a second region of interest is 1 or more and 30 or less, the second region of interest being a region outside a circle with a radius of 3 $\mu$m from the center of gravity and inside a circle with a radius of 7 $\mu$m from the center of gravity.

5. The silicon nitride sintered compact according to claim 4, wherein the average number of the three other grain boundary phase strengthened regions present in each of the three second target regions corresponding to the three reference grain boundary phase strengthened regions as the reference grain boundary phase strengthened regions is 2 or more and 20 or less.

6. The silicon nitride sintered compact according to any one of claims 1 to 5, wherein the diameter of each of the maltiple grain boundary phase strengthened regions is 2 μm or less, and the diameter is the average value of the major axis and the minor axis of each of the multiple grain boundary phase strengthened regions.

7. The silicon nitride sintered compact according to any one of claims 1 to 6, wherein the number of the other grain boundary phase strengthened regions present on a circle with a radius of 2 μm from the center of gravity of the reference grain boundary phase strengthened region or in a third region of interest located inside the circle is three or less.

8. The silicon nitride sintered compact according to any one of claims 1 to 7, wherein among the silicon nitride particles present within 1 μm from the edge of the grain boundary phase strengthened region, there are silicon nitride particles whose major diameter is smaller than the major diameter of the grain boundary phase strengthened region.

9. The silicon nitride sintered compact according to any one of claims 1 to 8, wherein among the silicon nitride particles present within 1 μm from the edge of the grain boundary phase strengthened region, the number ratio of silicon nitride particles having a major axis smaller than the major axis of the grain boundary phase strengthened region is 5% or more and 60% or less.

10. The silicon nitride sintered compact according to any one of claims 1 to 9, wherein in the L*a*b* color system of JIS_Z_8729, the lightness L* of the surface or cross section is 10 or more and 30 or less, and the saturation C is 30 or less.

11. The silicon nitride sintered compact according to any one of claims 1 to 10, wherein When the linear expansion coefficient at 25°C is taken as 0, the linear expansion coefficient at -200°C is -0.1% or more and 0% or less.

12. A wear-resistant member, wherein the silicon nitride sintered compact according to any one of claims 1 to 11 has a roller-like or substantially spherical shape.

13. A bearing ball using the wear-resistant member according to claim 12.

14. A bearing using the bearing ball according to claim 13.

1

# FIG. 1

2                                                    2

3                                                    3
4                                                    4
1                                                    1

(A)                                                  (B)

# FIG. 2

FIG. 3

FIG. 4

FIG. 5

**EP 4 678 617 A1**

## INTERNATIONAL SEARCH REPORT

| International application No. |
|---|
| **PCT/JP2024/007311** |

| | |
|---|---|
| **A.** | **CLASSIFICATION OF SUBJECT MATTER** |

*C04B 35/596*(2006.01)i; *F16C 33/32*(2006.01)i
FI:   C04B35/596; F16C33/32

According to International Patent Classification (IPC) or to both national classification and IPC

| | |
|---|---|
| **B.** | **FIELDS SEARCHED** |

Minimum documentation searched (classification system followed by classification symbols)

C04B35/596; F16C33/32

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| | |
|---|---|
| **C.** | **DOCUMENTS CONSIDERED TO BE RELEVANT** |

| Category* | Citation of document, with indication, where appropriate, of the relevant passages | Relevant to claim No. |
|---|---|---|
| X | JP 2015-209352 A (KYOCERA CORPORATION) 24 November 2015 (2015-11-24) paragraphs [0050]-[0062] | 1-7, 10-14 |
| A | | 8-9 |
| A | JP 2021-001094 A (KABUSHIKI KAISHA TOSHIBA) 07 January 2021 (2021-01-07) paragraphs [0022]-[0024] | 1-14 |
| A | JP 2000-072553 A (KYOCERA CORPORATION) 07 March 2000 (2000-03-07) entire text, all drawings | 1-14 |
| A | JP 2000-256066 A (KYOCERA CORPORATION) 19 September 2000 (2000-09-19) entire text, all drawings | 1-14 |
| A | WO 2008/032427 A1 (KABUSHIKI KAISHA TOSHIBA) 20 March 2008 (2008-03-20) paragraphs [0043]-[0061] | 1-14 |
| A | JP 2003-034581 A (KABUSHIKI KAISHA TOSHIBA) 07 February 2003 (2003-02-07) paragraph [0057] | 1-14 |

☑ Further documents are listed in the continuation of Box C.    ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **17 April 2024** | **07 May 2024** |

| Name and mailing address of the ISA/JP | Authorized officer |
|---|---|
| **Japan Patent Office (ISA/JP)** 3-4-3 Kasumigaseki, Chiyoda-ku, Tokyo 100-8915 Japan | |
| | Telephone No. |

Form PCT/ISA/210 (second sheet) (July 2022)

## INTERNATIONAL SEARCH REPORT

International application No.

**PCT/JP2024/007311**

### C. DOCUMENTS CONSIDERED TO BE RELEVANT

| Category* | Citation of document, with indication, where appropriate, of the relevant passages | Relevant to claim No. |
|---|---|---|
| A | JP 2001-328869 A (KABUSHIKI KAISHA TOSHIBA) 27 November 2001 (2001-11-27) paragraphs [0012]-[0015] | 1-14 |
| A | JP 2006-036554 A (KABUSHIKI KAISHA TOSHIBA) 09 February 2006 (2006-02-09) paragraphs [0075]-[0077] | 1-14 |
| A | JP 2004-002067 A (KABUSHIKI KAISHA TOSHIBA) 08 January 2004 (2004-01-08) paragraph [0054] | 1-14 |

Form PCT/ISA/210 (second sheet) (July 2022)

## INTERNATIONAL SEARCH REPORT
### Information on patent family members

International application No.

**PCT/JP2024/007311**

| Patent document cited in search report | | | Publication date (day/month/year) | Patent family member(s) | | | Publication date (day/month/year) |
|---|---|---|---|---|---|---|---|
| JP | 2015-209352 | A | 24 November 2015 | (Family: none) | | | |
| JP | 2021-001094 | A | 07 January 2021 | (Family: none) | | | |
| JP | 2000-072553 | A | 07 March 2000 | (Family: none) | | | |
| JP | 2000-256066 | A | 19 September 2000 | (Family: none) | | | |
| WO | 2008/032427 | A1 | 20 March 2008 | US paragraphs [0046]-[0058] EP CN | 2009/0238508 2062864 101511752 | A1 A1 A | |
| JP | 2003-034581 | A | 07 February 2003 | US paragraph [0062] WO CN | 2004/0191535 2003/010113 1537086 | A1 A1 A | |
| JP | 2001-328869 | A | 27 November 2001 | US paragraphs [0013]-[0017] EP KR CN | 2002/0010068 1134204 10-2001-0090450 1314323 | A1 A1 A A | |
| JP | 2006-036554 | A | 09 February 2006 | (Family: none) | | | |
| JP | 2004-002067 | A | 08 January 2004 | (Family: none) | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 59182276 A
- JP 4744704 B